**Europäisches Patentamt**

**European Patent Office**

**Office européen des brevets**

(19)

(11) Veröffentlichungsnummer : **0 058 314**
**B1**

(12) # EUROPÄISCHE PATENTSCHRIFT

(45) Veröffentlichungstag der Patentschrift :
28.08.85

(21) Anmeldenummer : 82100468.6

(22) Anmeldetag : 23.01.82

(51) Int. Cl.⁴ : **B 23 K 11/36**

(54) **Haltevorrichtung für bewegliche Schweisswerkzeuge bei einem Handhabungsgerät mit einem Drehanschluss für die Beschickung des Werkzeuges.**

(30) Priorität : **12.02.81 DE 3105105**

(43) Veröffentlichungstag der Anmeldung :
25.08.82 Patentblatt 82/34

(45) Bekanntmachung des Hinweises auf die Patenterteilung : 28.08.85 Patentblatt 85/35

(84) Benannte Vertragsstaaten :
**AT CH DE FR GB IT LI SE**

(56) Entgegenhaltungen :
BE-A- 654 305
FR-A- 1 547 931
FR-A- 2 140 229
GB-A- 737 489
US-A- 2 341 459
US-A- 2 879 490

(73) Patentinhaber : **KUKA Schweissanlagen & Roboter GmbH**
**Zugspitzstrasse 140**
**D-8900 Augsburg (DE)**

(72) Erfinder : **Zimmer, Ernst**
**Michael Steinherr Strasse 34**
**D-8904 Friedberg (DE)**

(74) Vertreter : **Ernicke, Hans-Dieter, Dipl.-Ing.**
**Schwibbogenplatz 2b**
**D-8900 Augsburg (DE)**

**Beschreibung**

Die Erfindung bezieht sich auf eine Haltevorrichtung für bewegliche Schweißwerkzeuge mit einem Drehanschluß für die Beschickung des Werkzeuges mit Schweißstrom, wobei senkrecht zur Drehachse stehende Stromkontaktflächen zwischen relativ zueinander drehbeweglichen Teilen unter Federvorspannung stehen und über einen mit Druckmittel beaufschlagbaren Kolben gegeneinander preßbar sind.

Bei beweglichen Schweißwerkzeugen der oben genannten Art besteht das Problem, die Zuführung und Abnahme des Schweißstromes trotz der mannigfachen Beweglichkeit des Schweißwerkzeuges sicherzustellen. Eine diese Problematik bewältigende Anordnung wird allgemein als Drehanschluß bezeichnet. Hierfür sind verschiedene Prinzipien entwickelt worden. Im einen Fall werden auf einer Zylindermantelfläche angeordnete Kontaktschalen in einem Winkel von ungefähr 180° von biegsamen Leiterschleifen umgriffen, die unter Zugspannung stehen und der Stromzuführung dienen (DE-AS 24 16 536). In einem anderen Fall werden konkav ausgebildete Kontaktschuhe mittels Federn, die eine einem Teilbereich einer Spirale entsprechende Formgebung aufweisen, gegen die Außenmantelfläche einer Welle verspannt (US-PS 2 879 490). Schließlich ist es bekannt, senkrecht zur Drehachse des Drehanschlusses sich erstreckende Kontaktflächen zufolge axialer Verspannung mittels Federn und Druckmedium miteinander in Berührung zu bringen (US-PS 2 341 459). Durch die FR-A 21 40 229 ist die Anwendung von Drehanschlüssen bei Manipulatoren bekannt.

Die Erfindung geht von der US-PS 2 341 459 aus, und zwar in dem Bestreben, einen optimalen Stromübergang bei hoher Lebensdauer zu erreichen, was für den Einsatz von Handhabungsgeräten (Manipulatoren) von entscheidender Bedeutung ist.

Derartige Handhabungsgeräte weichen jedoch hinsichtlich der Gestaltung der Schweißwerkzeuge nicht unerheblich voneinander ab, je nachdem, ob eine Schweißzange, eine Schweißhalbzange, ein Punktzylinder oder dgl. zum Einsatz kommen sollen. In der Praxis war es bisher erforderlich, für jede Art der Schweißwerkzeuge eine angepaßte Haltevorrichtung mit entsprechendem Drehanschluß zu entwickeln, wodurch sich Schwierigkeiten in der Planung von Handhabungsgeräten für große Stückzahlen ergeben.

Der Erfindung liegt demnach die Aufgabe zugrunde, eine Haltevorrichtung mit Drehanschluß für Handhabungsgeräte (Manipulatoren) zu entwickeln, daß je nach Verwendungszweck angepaßte Baugruppen miteinander durch Weglassen oder Hinzufügen verbunden werden können, so daß es möglich ist, vom Lager die für den einzelnen Verwendungszweck geeigneten Baugruppen abzurufen und zu montieren.

Ausgehend von der US-PS 2 341 459 besteht das Wesen der Erfindung darin, daß die Haltevorrichtung drei koaxial und aneinanderstossend angeordnete, miteinander drehstarr verbundene Führungsringe aufweist, welche Zuführleitungen für den Schweißstrom und ein Kühlmedium aufnehmen, und daß die voneinander distanzierten Führungsringe mit im Durchmesser größeren, bundartigen Kontaktringen versehen sind, zwischen denen ein drehbar auf einem zugeordneten Führungsring gelagerter Stromübertragungsring axial verspannbar angeordnet und über eine Mitnehmerstütze mit der das Werkzeug tragenden Welle drehschlüssig, jedoch axial beweglich geführt verbunden ist.

Bei einer Nebenanordnung der Erfindung ist vorgesehen, daß die Haltevorrichtung mindestens vier koaxial und aneinanderstoßend angeordnete, miteinander drehstarr verbundene Führungsringe aufweist, welche Zuführleitungen für den Schweißstrom und ein Kühlmedium sowie eine Zuführleitung für ein auf das Werkzeug einwirkendes Druckmedium aufnehmen, und daß zwei voneinander distanzierte Führungsringe mit im Durchmesser größeren, bundartigen Kontaktringen versehen sind, zwischen denen mindestens ein auf einem zugeordneten Führungsring gelagerter Stromübertrogungsring axial verspannbar angeordnet und über eine Mitnehmerstütze mit der das Werkzeug tragenden Welle drehschlüssig, jedoch axial beweglich geführt, verbunden ist.

Der Vorteil der Erfindung besteht darin, daß ein anschlußseitig drehstarres und ein abschlußseitig drehbares Bauteil zum Zwecke der Übertragung von Schweißstrom, Druckmedium und/oder Kühlflüssigkeit miteinander eine konstruktiv vorgegebene Baueinheit bilden, wobei je nach Verwendungszweck eine oder mehrere solcher Baueinheiten koaxial zueinander angeordnet und miteinander verbunden werden können, wobei die Vorteile der Schweißstromübertragung über zur Drehachse des Drehanschlusses senkrecht stehende Flächen mit entsprechender Beaufschlagung der Kontaktflächen gewahrt bleibt. Auf diese Weise ist es entbehrlich, für jedes zum Einsatz kommende Schweißwerkzeug einen bestimmten Drehanschluß mit Haltevorrichtung zu entwickeln. Man kann vielmehr die erfindungsgemäßen Baugruppen entsprechend dem gewünschten Verwendungszweck zusammensetzen. Auf diese Weise ergibt sich eine kostengünstige und außerdem noch raumsparende Gestaltung der Haltevorrichtung, die bei jedem Verwendungszweck einen hohen Wirkungsgrad besitzt.

Bevorzugte Einzelheiten der Erfindung ergeben sich aus den Unteransprüchen und aus der Beschreibung. Aus diesen zusätzlichen Merkmalen sind besonders diejenigen hervorzuheben, die mit einer axialen Beaufschlagung der Kontaktflächen mit Hilfe des an sich neuen Ringzylinders (Ansprüche 4 und 5) und mit der Ausbildung der Kontaktflächen (Ansprüche 6 und 7) sich befassen. Durch diese Maßnahmen wird der besonders günstige Andruck der Kontaktflächen für die Übertragung des Schweißstromes sowie die Unbeeinflußbarkeit der Vollflächigen Kontaktberührung durch Fremdkörper erreicht.

Ein weiterer wesentlicher Vorteil einer Ausführung ergibt sich aus dem Unteranspruch 9, wonach die elektrische Isolierung der Kontaktringe zu den übrigen Bauteilen durch Verwendung hartcoatierter Leichtmetallkörper erfolgt.

Die Erfindung bietet schließlich den Vorteil, daß trotz der Aufgliederung in Baugruppen die Zufuhr von Druckmedium für die Betätigung der Ringzylinder zum Anpressen der Kontaktflächen und die Zufuhr von Kühlmedien für die stromübertragenden Teile ohne wesentlichen Aufwand möglich ist.

Soweit zu einzelnen Unteransprüchen keine besonderen Vorteile angegeben sind, ergeben diese sich aus der Offenbarung der Ansprüche und der Beschreibung.

Einzelheiten der Erfindung sind in der Zeichnung schematisch und beispielsweise dargestellt. Es zeigen:

Figur 1: eine Haltevorrichtung mit einem Drehanschluß für einen einphasigen Stromanschluß,

Figur 2: eine Haltevorrichtung mit Drehanschluß für einen einphasigen Stromanschluß und zusätzlicher Druckbetätigung eines Schweißwerkzeuges,

Figur 3: eine Haltevorrichtung mit Drehanschluß für einen zwei-phasigen Stromanschluß nebst Druckbeaufschlagung des Schweißwerkzeuges und

Figur 4: eine Stirnansicht der elektrischen Kontaktflächen gemäß Querschnitt A-A nach Figur 3.

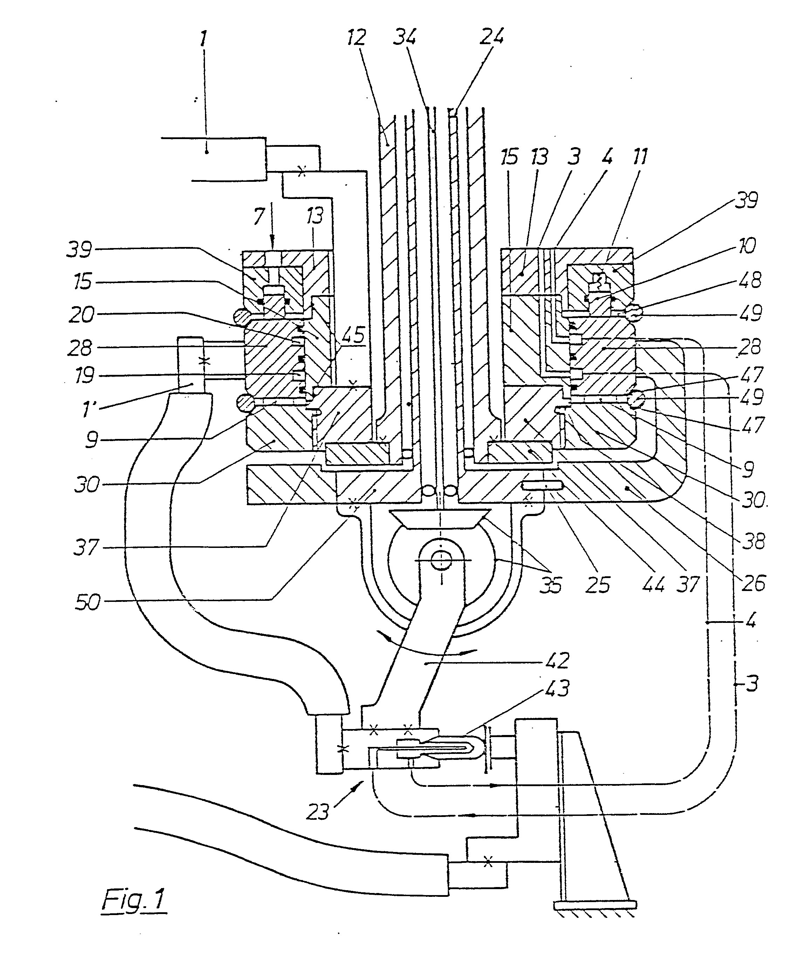

Im Ausführungsbeispiel der Figur 1 ist im Längsschnitt eine Haltevorrichtung mit Drehanschluß für einen einphasigen Stromanschluß gezeigt, wobei davon ausgegangen wird, daß an einem schwenkbaren Hebel 42 eine Elektrode 43 angeordnet ist, die mit Schweißstrom und kühlmedium versorgt werden muß. Diese Elektrode 43 ist, wie bei Handhabungsgeräten üblich, dreidimensional im Raum bewegbar, weshalb die Anschlüsse für Schweißstrom und Kühlmedium dieser Beweglichkeit der Elektrode 43 folgen müssen. Es ist in Figur 1 ferner davon ausgegangen, daß der Hebel 42 von einer Welle 34 über ein Kegelradpaar 35 zur Ausführung der Schwenkbewegung angetrieben ist, wohingegen die Haltevorrichtung von einem relativ zur Welle 34 ortsfesten Tragarm 12 gebildet ist. Dieser Tragarm 12 kann Bauteil eines Manipulators und damit ebenfalls ortsbeweglich sein.

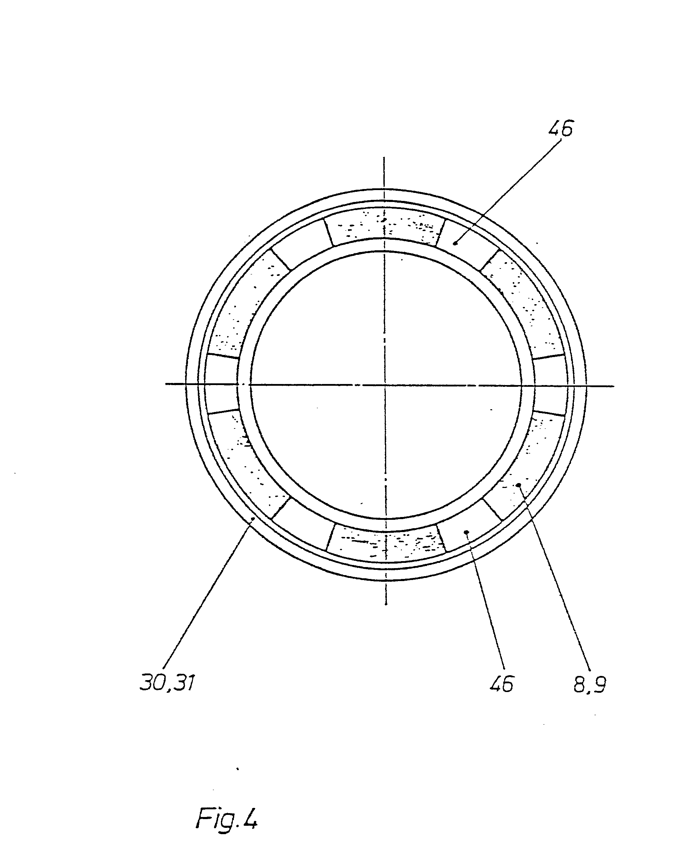

Mit dem Tragarm 12 ist zunächst ein Haltering 44 drehstarr verbunden, der als eine Art Flansch wirkt und zahlreiche koaxial zueinander angeordnete Bauteile trägt. Diesem Haltering 44 ist ein Führungsring 37 benachbart, dem ein Kontaktring 30 zugeordnet ist, der nach dem Ausführungsbeispiel auf dem Führungsring 37 gegen einen Bund 38 aufschraubbar ist. Dieser Kontaktring 30 trägt stirnseitig ein Kontaktsegment 9, dessen konstruktive Formgebung in Figur 4 näher dargestellt ist.

An dieses Kontaktsegment 9 grenzt ein Stromübertragungsring 28, der auf einem ihm zugeordneten Führungsring 15 drehbar gelagert ist, wobei der Führungsring 15 mit dem Führungsring 37 über die Führung 45 koaxial und drehstarr verbunden ist.

Der Stromübertragungsring 28 weist auf der dem Kontaktring 30 entgegengesetzten Seite einen Ringkolben 10 auf, der in eine passende ringförmige Nut eines Anpreßzylinderringes 39 gegen die Wirkung einer Feder 11 eingreift. Dieser Anpreßzylinderring 39 sitzt auf einem ihm zugeordneten Führungsring 13, der seinerseits wiederum über die Führung 45 mit dem vorher erwähnten Führungsring 15 koaxial und drehschlüssig verbunden ist. Mit 7 ist ein Druckluftanschluß am Führungsring 13 bezeichnet, der die Aufgabe hat, den Ringkolben 10 und damit den Stromübertragungsring 28 axial gegen das Kontaktsegment 9 des Kontaktringes 30 zu pressen, wenn Schweißstrom übertragen werden soll.

Aufgrund dieser Konzeption ergeben sich also folgende Baugruppen:

Der Anpreßzylinderring 39 ist auf dem Führungsring 13 drehstarr und geführt angeordnet. Der Stromübertragungsring 28 ist auf dem zugeordneten Führungsring 15 drehbar gelagert, wobei die Führungsringe 15, 13 über die Führungen 45 miteinander koaxial und drehschlüssig verbunden sind. Der Kontaktring 30 ist auf dem zugeordneten Führungsring 37 zufolge Verschraubung drehstarr angeordnet, wobei der Führungsring 37 koaxial und fest mit dem Führungsring 15 verbunden ist. Die Beaufschlagung des Ringkolbens 10 führt also zur Verspannung des Stomübertragungsringes 28 zwischen den Kontaktringen 30 und dem Anpreßzylinderring 39.

Mit 1 ist der Zugang des Stromanschlusses symbolisch dargestellt. Der Stromanschluß 1 geht über den Führ-ungsring 37 und den Kontaktring 30 auf den Stromübertragungsring 28, an den der Stromanschluß 1' für den Abgang des Schweißstromes angeschlossen ist. Dieser Stromanschluß 1' führt zum Schweißwerkzeug 23 und kann damit der Drehbewegung des Stromübertragungsringes 28 folgen. Damit die elektrisch leitenden Teile von den führenden Teilen vorzugsweal elektrisch isoliert sind, sieht die Erfindung vor, die führenden Teile aus hartcoatiertem Leichtmetall auszubilden. Von solchen Bauteilen weiß man, daß sie elektrisch isolierend wirken.

Die Kühlung der Elektrode 43 wird über den Stromübertragungsring 28 vorgenommen. Zu diesem Zwecke befinden sich in den Führungsringen 13, 15 parallel zur Achse befindliche Bohrungen 3, 4 für die Zuführung und Rückleitung des Kühlmediums. Von diesen Bohrungen gehen radiale Bohrungen in Ringkanäle 19, 20 über, die sich in der Bohrungswandfläche des Stromübertragungsringes 28 befinden. Von diesen Ringkanälen 19, 20 sind mit dem Stromübertragungsring 28 verbundene Kühlmittelleitungen 3, 4 bis zur Elektrode 43 geführt.

Es muß natürlich sichergestellt werden, daß sich der Stromübertragungsring 28 synchron mit dem Werkzeug 23 dreht. Zu diesem Zweck ist mit der Welle 24, welche das Schwenklager für den Hebel 42 trägt, ein Flansch 50 und mit dem Flansch 50 eine Mitnehmerstütze 26 über den Stift 25 drestarr verbunden. Mit dieser Mitnehmerstütze 26, die sich also drehstarr mit der Welle 24 dreht, ist der Stromübertragungsring 28 drehstarr aber axial beweglich und elektrisch isoliert verbunden. Diese axiale Bewegbarkeit ergibt sich notwendigerweise aus der axialen Verstellung des Stromübertragungsringes 28 aufgrund der Beaufschlagung des Ringkolbens 10 über den Druckluftanschluß 7. Zufolge der Drehschlüssigkeit zwischen dem Stromübertragungsring 28 und der Mitnehmerstütze 26 ergibt sich jedoch eine synchrone Bewegung des Stromübertragungsringes 28 zum Werkzeug 23.

Um die in Fig. 4 dargestellte Profilierung der Kontaktsegmente 9 und die Anlagefläche des Ringkolbens 10 gegen Staub, Festkörper oder sonstige Beeinflussung zu schützen, sind die einander zugeordneten außenliegenden Randkanten des Kontaktringes 30 des Anpreßzylinderringes 39 und des Stromübertragungsringes 28 mit Anschrägungen 47 versehen, von denen Zwischenspalte 48 gebildet sind, in welche Rundschnurringe 49 als Dichtungsmittel eingesetzt sind.

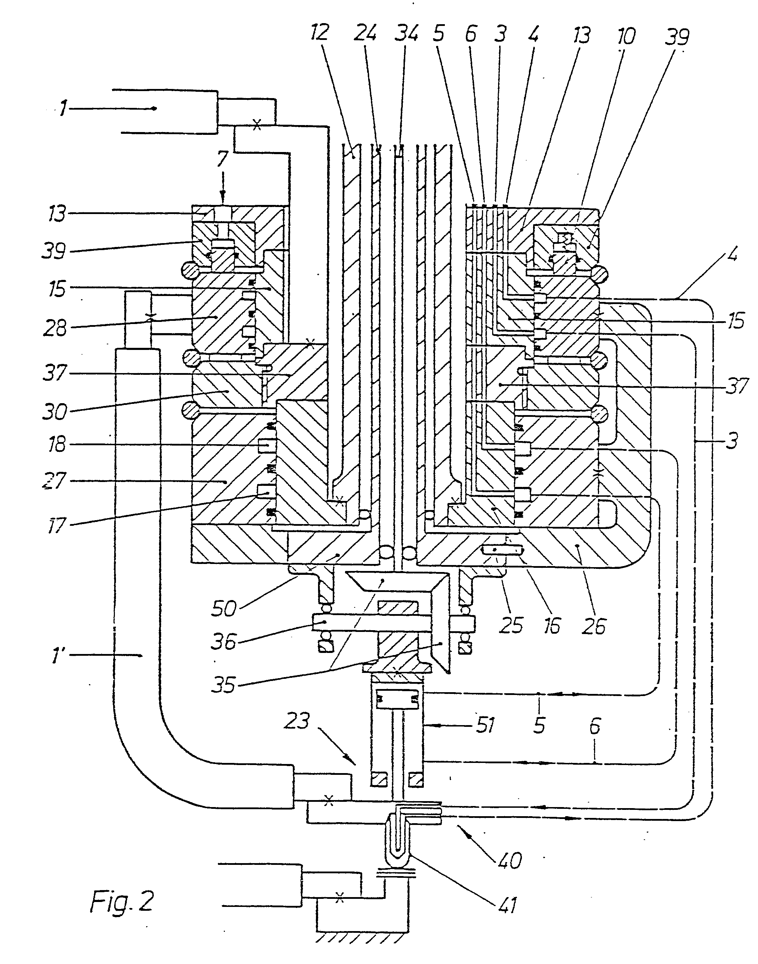

Das Ausführungsbeispiel der Fig. 2 unterscheidet sich von demjenigen der Fig. 1 dadurch, daß das Werkzeug 23 mit einem Anpreßzylinder 51 versehen ist, welcher die Elektrode 41 des Schweißzylinders 40 zu betätigen hat. Auch in diesem Falle ist ein einphasiger Stromanschluß vorgesehen.

Der Drehanschluß gemäß Figur 1 muß demgemäß durch eine Baugruppe ergänzt werden, welche die Druckmittelzufuhr zu dem Anpreßzylinder 51 gestattet. Zu diesem Zweck ist der Haltering 44 gemäß Figur 1 durch einen Führungsring 16 gemäß Figur 2 ersetzt worden, mit dem koaxial die Führungsringe 13, 15 und 37 entsprechend Figur 1 drehstarr und geführt verbunden sind. Der neu hinzugekommene Führungsring 16 trägt seinerseits drehbar einen Ring 27, in dem Ringkanäle 17, 18 bohrungsseitig umlaufend angeordnet sind, mit welchen die Zu- und Ableitungen 5, 6 für das Druckmedium zur Betätigung des Anpreßzylinders 51 verbunden sind. Diese Ringkanäle 17, 18 werden durch die Druckmediumsleitungen 5, 6 über den Weg der Führungsringe 13, 15, 37, 16 versorgt.

Die in Figur 2 nicht bezeichnete Gegenelektrode wird durch einen separaten Stromanschluß versorgt. Außerdem zeigt Figur 2 gegenüber Figur 1 die Besonderheit, daß das Schweißwerkzeug 23 um die Achse 36 gegenüber dem Flansch 50 der Welle 24 schwenkbar ist und demgamäß der Anpreßzylinder 51 dieser Schwenkbewegung um die Achse 36 folgen muß.

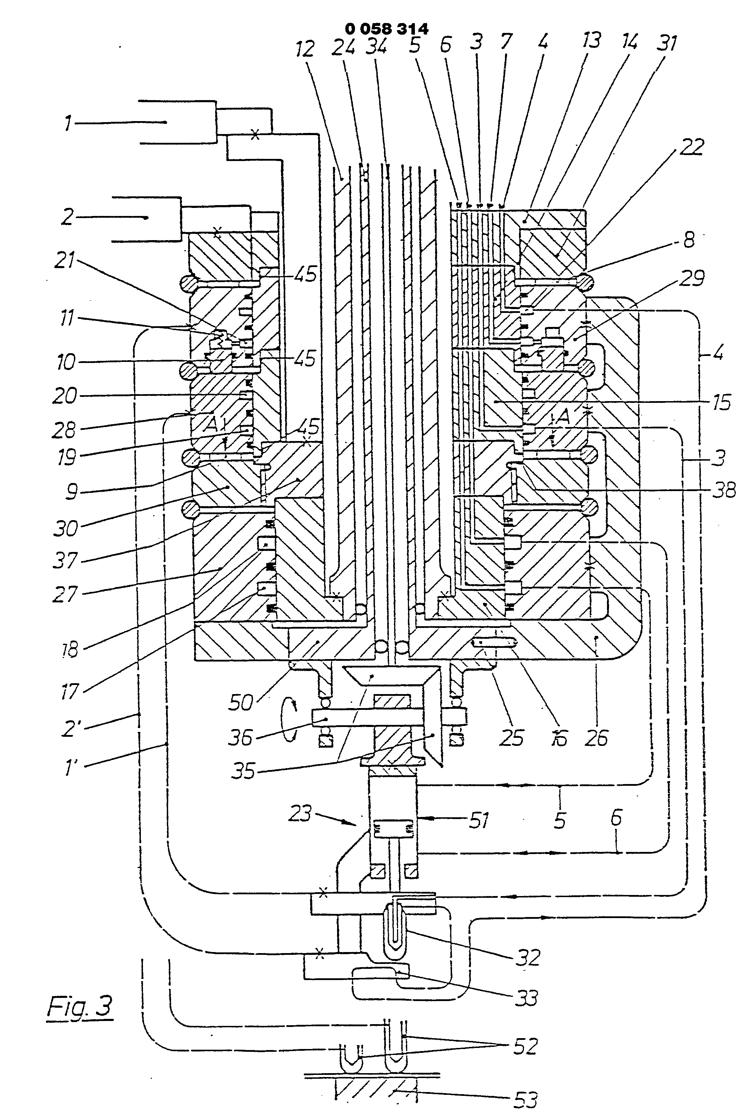

In Figur 3 ist schließlich eine weitere Ergänzung der erfindungsgemäßen Haltevorrichtung dargestellt, wobei es um einen Drehanschluß mit zwei-phasigem Stromanschluß einschl. Kühlwasserversorgung und Druckluftanschluß geht.

Auffallend ist zunächst, daß zwei Stromübertragungsringe 28, 29 einander benachbart angeordnet sind, wobei der Stromübertragungsring 29 auf einem ihm zugeordeneten Führungsring 14 drehbar gelagert ist. Dieser Führungsring 14 ist in der gleichen Weise mit seinen benachbarten Führungsringen 13, 15 koaxial geführt und drehschlüssig verbunden. Die Mitnehmerstütze 26 führt beide Stromübertragungsringe 28, 29 drehschlüssig und läßt ihre axiale Bewegung zu. Der Ringkolben 10 ist zwischen beiden Stromübertragungsringen 28, 29 angeordnet. Infolgedessen gibt es ewei Kontaktsegmente 8, 9, die durch Auseinanderspreizen der Stromübertragungsringe 28, 29 vollen Kontakt gegenüber den Kontaktringen 30,31 erhalten. In diesem Falle ist der Druckluftanschluß 7 ebenfalls koaxial und benachbart zu den Leitungen für Kühlwasser 3, 4 und Druckmedium 5, 6 für die Betätigung des Anpreßzylinders 51 angeordnet. Der Anpreßzylinderring 39 aus Fig. 1 und 2 ist in Fig. 3 durch Kontaktring 31 ersetzt worden.

Der Kontaktring 29 ist mit dem Stromanschluß 2 zugangsseitig über den Kontaktring 31 verbunden. Der Stromanschluß für den Stromübertragungsring 28 erfolgt — ähnlich zu Figur 1 — über den Stromanschluß 1 und den Kontaktring 30. Auch in diesem Falle sind die nichtleitenden Bauteile vorzugsweise aus hartcoatiertem Aluminium hergestellt.

Der Stromübertragungsring 29 weist wie der Stromübertragungsring 28 einen entsprechenden Ringkanal 22, der zur Kühlung der Elektrode 32 und Gegenelektrode 33 dienen soll, und den Ringkanal 21 auf, der über Druckluftanschluß 7 den Ringkolben 10 mit Druckluft versorgt. Außerdem ist mit dem Stromübertragungsring 29 der abgangsseitige Stromanschluß 2' verbunden. Der Ringkanal 20 des Kontaktringes 28 bleibt bei dieser Variante unbenutzt.

Man erkennt also, daß mit gleichartigen Baugruppen eine Haltevorrichtung mit Drehanschluß für verschiedene Anwendungszwecke im Baukastenprinzip durch Zusammenfügen oder Weglassen gebildet werden kann. In jedem Falle ist die exakte Stromführung über stirnseitig miteinander angedrückte Kontaktsegmente 8, 9 gewährleistet.

Statt der gezeichneten Schweißzange 23 kann wahlweise mit Doppelelektroden 52 indirekt gegen Unterkupfer 53, welches den Stromkreis schließt, geschweißt werden. Die beiden Elektroden sind jeweils mit Stromanschluß 1' bzw. 2' verbunden und werden jede für sich durch nicht gezeichnete Anpreßzylinder gegen das zu verschweißende Teil bzw. gegen das Unterkupfer gepreßt. Die beiden anpreßzylinder sind bezüglich der Versorgung mit dem Druckmedium parallel geschaltet und können erforderlichenfalls im Abstand mittels eines Antriebs in einer Führung verstellt werden.

In der Figur 4 ist nun die Stirnansicht solcher Kontaktsegmente 8, 9 gezeigt, die an den Kontaktringen 30, 31 angeordnet sind. Diese von planen Stirnflächen gebildeten Kontaktsegmente 8, 9 weisen nämlich Unterbrechungen in Form von Taschen 46 auf, welche gegenüber der Stirnfläche der Kontaktsegmente 8, 9 zurückversetzt sind. Wenn sich also zwischen den Kontaktflächen 8, 9 Festkörper, beispielsweise in Form von Staub, ansammeln sollten, werden diese durch Relativdrehbewegung mitgenommen und fallen in die Taschen 46 ab und werden dadurch wirkungslos. Die Kontaktsegmente 8, 9 selbst sind aus aufgelötetem und plangedrehtem Kontaktsilber in üblicher Weise hergestellt.

Aufgrund der gezeigten unterschiedlichen Ausführungsbeispiele ist erkennbar, daß sich die Erfindung nicht auf diese Ausführungsbeispiele beschränkt sondern auch auf andere zweckmäßige Anordnungen von Haltevorrichtungen mit Drehanschluß anwendbar ist.

Stückliste

1 Stromanschluß (Zugang)
1' Stromanschluß (Abgang)
2 Stromanschluß (Zugang)
2' Stromanschluß (Abgang)
3 Kühlwasser-Zuleitung
4 Kühlwasser-Rückleitung
5 Druckmedium-Zuleitung
6 Druckmedium-Rückleitung
7 Druckluftanschluß
8 Kontaktsegment
9 Kontaktsegment
10 Ringkolben
11 Feder
12 Tragarm
13 Führungsring
14 Führungsring
15 Führungsring
16 Führungsring
17 Ringkanal
18 Ringkanal
19 Ringkanal
20 Ringkanal
21 Ringkanal
22 Ringkanal
23 Werkzeug (Schweißzange)
24 Welle
25 Stift
26 Mitnehmerstütze
27 Ring
28 Stromübertragungsring
29 Stromübertragungsring
30 Kontaktring
31 Kontaktring
32 Elektrode
33 Gegenelektrode
34 Welle
35 Kegelradpaar
36 Achse
37 Führungsring

38 Bund
39 Anpreßzylinderring
40 Schweißzylinder
41 Elektrode
42 Hebel
43 Elektrode
44 Haltering
45 Führung
46 Tasche
47 Anschrägung
48 Zwischenspalt
49 Rundschnurring
50 Flansch
51 Anpreßzylinder
52 Doppelelektroden
53 Unterkupfer
54

**Patentansprüche**

1. Haltevorrichtung für bewegliche Schweißwerkzeuge (23) mit einem Drehanschluß für die Beschickung des Werkzeuges (23) mit Schweißstrom (1), wobei senkrecht zur Drehachse stehende Stromkontaktflächen (8) zwischen relativ zueinander drehbeweglichen Teilen (28, 30) unter Federvorspannung (11) stehen und über einen mit Druckmittel (7) beaufschlagbaren Kolben (10) gegeneinander preßbar sind, dadurch gekennzeichnet, daß die Haltevorrichtung drei koaxial und aneinanderstoßend angeordnete, miteinander drehstarr verbundene Führungsringe (13, 15, 37) aufweist, welche Zuführleitungen (1, 3) für den Schweißstrom und ein Kühlmedium aufnehmen, und daß die voneinander distanzierten Führungsringe (13, 37) mit im Durchmesser größeren, bundartigen Kontaktringen (30, 39) versehen sind, zwischen denen ein drehbar auf einem zugeordneten Führungsring (15) gelagerter Stromübertragungsring (28) axial verspannbar angeordnet und über eine Mitnehmerstütze (26) mit der das Werkzeug (23) tragenden Welle (24) drehschlüssig, jedoch axial beweglich geführt, verbunden ist.

2. Haltevorrichtung für bewegliche Schweißwerkzeuge (23) mit einem Drehanschluß für die Beschickung des Werkzeuges (23) mit Schweißstrom (1), wobei senkrecht zur Drehachse stehende Stromkontaktflächen (9) zwischen relativ zueinander drehbeweglichen Teilen (28, 30) unter Federvorspannung (11) stehen und über einen mit Druckmittel (7) beaufschlagbaren Kolben (10) gegeneinander preßbar sind, dadurch gekennzeichnet, daß die Haltevorrichtung mindestens vier koaxial und aneinanderstoßend angeordnete, miteinander drehstarr verbundene Führungsringe (13, 14, 15, 16, 37) aufweist, welche Zuführleitungen (1, 2, 3) für den Schweißstrom und ein Kühlmedium sowie eine Zuführleitung (5) für ein auf das Werkzeug (23) einwirkendes Druckmedium aufnehmen, und daß zwei voneinander distanzierte Führungsringe (13, 37) mit im Durchmesser Größeren, bundartigen Kontaktringen (30 und 31 bzw. 39) versehen sind, zwischen denen mindestens ein auf einem zugeordneten Führungsring (14, 15) gelagerter Stromübertraungsring (28, 29) axial verspannbar angeordnet und über eine Mitnehmerstütze (26) mit der das Werkzeug (23) tragenden Welle (24) drehschlüssig, jedoch axial beweglich geführt, verbunden ist.

3. Haltevorrichtung nach Anspruch 1 oder 2, dadurch gekennzeichnet, daß die Führungsringe (13 bis 15, 37) stirnseitig stufenartig abgesetzte Führungen (45) gleichen Durchmessers für eine in der Zahl wahlweise Aneinanderreihung aufweisen.

4. Haltevorrichtung nach Anspruch 1 oder einem der folgenden, dadurch gekennzeichnet, daß die axiale Verspannung des Stromübertragungsringes (28 bzw. 29) mit den Kontaktringen (30, 31) über einen in eine umlaufende, den Zylinder bildende Nut eingreifenden, vorzugsweise federbelasteten Ringkolben (10) gebildet ist.

5. Haltevorrichtung nach Anspruch 2 oder einem der folgenden, dadurch gekennzeichnet, daß zwischen zwei benachbarten Stromübertragungsringen (28, 29) ein sie voneinander wegspreizender Ringkolben (10) angeordnet ist.

6. Haltevorrichtung nach Anspruch 1 oder einem der folgenden, dadurch gekennzeichnet, daß die Kontaktfläche durch stirnseitig erhaben ausgebildete, voneinander durch zurückversetzte Flächen distanzierte Kontaktsegmente (8, 9) gebildet sind.

7. Haltevorrichtung nach Anspruch 6, dadurch gekennzeichnet, daß die Kontaktsegmente (8, 9) aus aufgelötetem und plangedrehtem Kontaktsilber bestehen.

8. Haltevorrichtung nach Anspruch 1 oder einem der folgenden, dadurch gekennzeichnet, daß die auf den Führungsringen (14, 15, 16) drehbar gelagerten Stromübertragungsringe (28, 29) bzw. sonstige Ringe (27) jeweils zwei voneinander distanzierte, in ihrer Bohrungswandung umlaufende Ringkanäle (17, 18 ; 19, 20 und 21, 22) aufweisen, die bohrungsseitig mit in den Führungsringen (14, 15, 16) befindlichen Radialbohrungen der Zu- und Rückführleitungen (3 bis 7) für die einzelnen Druck- und Kühlmedien in Verbindung stehen und die mit zum Werkzeug (23) führenden, an den drehbar gelagerten Ringen (27 bis 29) befestigten Anschlüssen verbunden sind.

9. Haltevorrichtung nach Anspruch 1 oder einem der folgenden, dadurch gekennzeichnet, daß die von den Stromübertragungsringen (28, 29) und von den Kontaktringen (30, 31) elektrisch zu isolierenden Bauteile aus hartcoatiertem Leichtmetall bestehen.

10. Haltevorrichtung nach Anspruch 1 oder einem der folgenden, dadurch gekennzeichnet, daß der dem Werkzeug (23) zugewandte Kontaktring (30) auf seinem Führungsring (37) gegen einen Bund (38) festgeschraubt ist.

11. Haltevorrichtung nach Anspruch 1 oder einem der folgenden, dadurch gekennzeichnet, daß der Tragarm (12) über den dem Werkzeug (23) zugewandten Kontaktring (30) in Richtung zum Werkzeug (23) vorsteht und einen Führungsring (16) zur drehbaren Aufnahme eines Ringes (27) trägt, über dessen Ringkanäle (17, 18) ein Druckmedium zur Betätigung eines Arbeitszylinders am Werkzeug (23) geführt ist.

12. Haltevorrichtung nach Anspruch 1 oder einem der folgenden, dadurch gekennzeichnet, daß anstelle eines der Führungsringe (16) ein mit dem den Kontaktring (30) tragenden Führungsring (37) fest verbundener Haltering (44) vorgesehen ist.

13. Haltevorrichtung nach Anspruch 1 oder einem der folgenden, dadurch gekennzeichnet, daß die einander zugekehrten Außenrandkanten der Stromübertragungsringe (28, 29) Kontaktringe (30, 31) des Anpreßzylinderringes (39) und des Ringes (27) mit Abschrägungen (47) versehen sind und daß in die durch die Abschrägungen (47) gebildeten Zwischenspalte (48) Rundschnurringe (49) eingesetzt sind.

**Claims**

1. Holding device for movable welding tools (23) with a rotatable connection for supplying welding current (1) to the tool (23), wherein current contact surfaces (8) aligned perpendicular to the rotational axis stand, under spring pretensioning (11), between parts (28, 20) rotationally movable relative to one another, and can be pressed together by means of a piston (10) chargeable with a pressure medium (7), characterised in that the holding device has three coaxially and mutually contiguously arranged guide rings (13, 15, 37) connected to one another in a torsionally rigid manner, which accommodate feed lines (1, 3) for the welding current and a cooling medium, and that the mutually spaced apart guide rings (13, 37) are provided with collar-type contact rings (30, 39) of larger diameter, between which a current transmission ring (28) mounted rotatably on an associated guide ring (15) can be axially clamped, and via which a drive support (26) is connected in a rotationally locked, but axially movable manner, to the shaft (24) carrying the tool (23).

2. Holding device for movable welding tools (23) with a rotatable connection for supplying welding current (1) to the tool (23), wherein current contact surfaces (8) aligned perpendicular to the rotational axis stand, under spring pretensioning (11), between parts (28, 30) rotationally movable relative to one another, and can be pressed together by means of a piston (10) chargeable with a pressure medium (7), characterised in that the holding device has at least four guide rings (13, 14, 15, 16, 37) arranged coaxially and mutually contiguously and in a torsionally rigid manner, wich accommodate feedlines (1, 2, 3) for the welding current and a cooling medium as well as a feedline (5) for a pressure medium acting on the tool (23), and that two spaced-apart guide rings (13, 37) are provided with collar-type contact rings (30 and 31 or 39) of larger diameter, between which at least one current transmission ring (28, 29) mounted on an associated guide ring (14, 15) can be axially clamped, and via which a drive support (26) is connected in a rotationally locked, but axially movable manner, to the shaft (24) carrying the tool (23).

3. Holding device according to claim 1 or 2, characterised in that the guide rings (13 to 15, 37) have step-wise staggered guides (45) of the same diameter for a numerically arbitrary row alignment.

4. Holding device according to claim 1 or one of the following claims, characterised in that the axial clamping of the current transmission ring (28, 29) to the contact rings (30, 31) is provided by a preferably spring-loaded annular piston (10) engaging in a rotating groove forming the cylinder.

5. Holding device according to claim 2 or one of the following claims, characterised in that an annular piston (10) is arranged between two adjacent current transmission rings (28, 29) in such a way as to force the latter apart.

6. Holding device according to claim 1 or one of the following claims, characterised in that the contact surface is formed by contact segments (8, 9) formed raised on the front face and spaced apart from one another by backwardly aligned surfaces.

7. Holding device according to claim 6, characterised in that the contact segments (8, 9) consist of welded-on and faced contact silver.

8. Holding device according to claim 1 or one of the following claims, characterised in that the current transmission rings (28, 29) or other rings (27) rotatably mounted on the guide rings (14, 15, 16) in each case have two spaced-apart annular channels (17, 18 ; 19, 20 and 21, 22) rotating in their bore wall, which are in contact on the bore side with radial bores, located in the guide rings (14, 15, 16), of the feedlines and return lines (3 to 7) for the individual pressure and cooling media, and which are joined to connections, secured on the rotatably mounted rings (27 to 29), leading to the tool (23).

9. Holding device according to claim 1 or one of the following claims, characterised in that the structural parts to be electrically insulated from the current transmission rings (28, 29) and from the contact rings (30, 31) consist of hard-coated light metal.

10. Holding device according to claim 1 or one of the following claims, characterised in that the contact ring (30) facing the tool (23) is firmly screwed on its guide ring (37) to a collar (38).

11. Holding device according to claim 1 or one of the following claims, characterised in that the carrying arm (12) projects beyond the contact ring (30) facing the tool (23), in the direction of the tool (23), and carries a guide ring (16) for rotatable accommodation of a ring (27), via whose annular channels (17, 18) a pressure medium is fed to the tool (23) to actuate a working cylinder.

12. Holding device according to claim 1 or one of the following claims, characterised in that instead of one of the guide rings (16), a holding ring (44) firmly connected to the guide ring (37) carrying the contact ring (30) is provided.

13. Holding device according to claim 1 or one of the following claims, characterised in that the mutually facing external edges of the current transmission rings (28, 29) and the contact rings (30, 31) of the compression cylinder ring (39) and ring (27) are provided with bevelled surfaces (47), and that round core rings (49) are inserted in the gaps (48) formed by the bevelled surfaces (47).

## Revendications

1. Dispositif de maintien pour des outils de soudages mobiles (23) comportant un raccord tournant pour l'alimentation de l'outil (23) avec un courant de soudage (1), et dans lequel des surfaces (8) de contact pour le courant, perpendiculaires à l'axe de rotation, sont disposées entre des parties (28, 30) aptes à tourner l'une par rapport à l'autre, en étant soumises à la précontrainte (11) d'un ressort et peuvent être pressées l'une contre l'autre par l'intermédiaire d'un piston (10) pouvant être chargé à l'aide d'un fluide sous pression, caractérisé par le fait que le dispositif de maintien comporte trois bagues de guidage (13, 15, 37) disposées coaxialement en aboutement les unes contre les autres, et reliées entre elles avec blocage en rotation et qui reçoivent les lignes d'alimentation (1, 3) pour le courant de soudage et pour un fluide de refroidissement, et que les bagues de guidage (13, 37), maintenues à distance les unes des autres, sont munies de bagues de contact (30, 39) en forme de collets, d'un diamètre supérieur, et entre lesquelles une bague (28) de transmission du courant, qui est montée rotative sur une bague de guidage (15) associée, est disposée de manière à pouvoir être serrée axialement et est reliée de manière à pouvoir tourner tout en pouvant avoir un déplacement axial, par l'intermédiaire d'un support d'entraînement (26) à l'arbre (24) portant l'outil (23).

2. Dispositif de maintien pour des outils de soudage mobiles (23) comportant un raccord tournant pour l'alimentation de l'outil (23) avec un courant de soudage (1), et dans lequel des surfaces (9) de contact pour le courant, perpendiculaires à l'axe de rotation, sont disposées entre des parties (28, 30) aptes à tourner l'une par rapport à l'autre, en étant soumises à la précontrainte (11) d'un ressort et peuvent être pressées l'une contre l'autre par l'intermédiaire d'un piston (10) pouvant être chargé à l'aide d'un fluide comprimé, caractérisé par le fait que le dispositif de maintien comporte au moins quatre bagues de guidage (13, 14, 15, 16, 37) disposées coaxialement en aboutement réciproque et reliées entre elles avec blocage en rotation, et qui logent des lignes d'alimentation (1, 2, 3) pour le courant de soudage et un fluide de refroidissement ainsi qu'une canalisation d'amenée (5) pour un fluide sous pression agissant sur l'outil (23), et que deux bagues de guidage (13, 37) maintenues à distance l'une de l'autre sont munies de bagues de contact (30 et 31 ou 39) en forme de collets, d'un diamètre supérieur, entre lesquelles au moins une bague (28, 29) de transmission du courant, montée sur une bague de guidage associée (14, 15) est disposée de façon à pouvoir être serrée axialement et est reliée, de manière à pouvoir tourner tout en pouvant avoir un déplacement axial, par l'intermédiaire d'un support d'entraînement (26) à l'arbre (24) portant l'outil (23).

3. Dispositif de maintien suivant la revendication 1 ou 2, caractérisé par le fait que les bagues de guidage (13 à 15, 37) possèdent des guides (45) étagés sous la forme d'épaulements sur leur face frontale et de même diamètre pour un montage en série en un nombre pouvant être choisi à volonté.

4. Dispositif de maintien suivant la revendication 1 ou l'une des suivantes, caractérisé par le fait que le serrage axial de la bague (28 ou 29) de transmission du courant avec les bagues de contact (30, 32) est réalisé par l'intermédiaire d'un piston annulaire (10) s'engageant dans une gorge périphérique constituant le cylindre et de préférence chargé par un ressort.

5. Dispositif de maintien suivant la revendication 2 ou l'une des suivantes, caractérisé par le fait qu'entre deux bagues voisines (28, 39) de transmission du courant se trouve disposé un piston annulaire (10) écartant les bagues l'une de l'autre.

6. Dispositif de maintien suivant la revendication 1 ou l'une des suivantes, caractérisé par le fait que les surfaces de contact sont formées par des segments de contact (8, 9) réalisés avec une forme bombée sur leur face frontale et maintenus à distance l'un de l'autre par des surfaces disposées en retrait.

7. Dispositif de maintien selon la revendication 6, caractérisé en ce que les segments de contact (8, 9) sont constitués par de l'argent pour contacts soudé et surfacé.

8. Dispositif de maintien suivant la revendication 1 ou l'une des précédentes, caractérisé par le fait que les bagues (28, 29) de transmission du courant ou d'autres bagues (27), montées rotatives sur les bagues de guidage (14, 15, 16) comportent chacune deux canaux annulaires (17, 18 ; 19, 20 et 21, 22) maintenus à distance l'un de l'autre et s'étendant dans la paroi du perçage des bagues et qui sont reliés du côté du perçage, à des perçages radiaux, situés dans la bague de guidage (14, 15, 16), des lignes d'amenée et de retour (3 à 7) pour les différents fluides sous pression et de refroidissement, et qui sont reliés aux raccords aboutissant à l'outil (23) et fixés sur les bagues (27 à 29) montées rotatives.

9. Dispositif de maintien suivant la revendication 1 ou l'une des suivantes, caractérisé par le fait que les composants, qui doivent être électriquement isolés des bagues (28, 29) de transmission du courant et des bagues de contact (30, 31), sont constitués en un métal léger muni d'un revêtement dur.

10. Dispositif de maintien suivant la revendication 1 ou l'une des revendications suivantes, caractérisé en ce que la bague de contact (30), tournée vers l'outil (23), est vissée fermement sur une bague de guidage (37) contre un collet (38).

11. Dispositif de maintien suivant la revendication 1 ou l'une des suivantes, caractérisé par le fait que le bras de support (12) fait saillie au-delà de la bague de contact (30), tournée vers l'outil (23), en direction de ce dernier et porte une bague de guidage (16) servant à loger, avec possibilité de rotation, une bague (27) par l'intermédiaire des canaux annulaires (17, 18) de laquelle un fluide sous pression est envoyé à l'outil (23) en vue d'actionner un vérin de travail.

12. Dispositif de maintien suivant la revendication 1 ou l'une des suivantes, caractérisé par le fait qu'il est prévu, à la place de l'une des bagues de guidage (16), une bague de guidage (44) reliée rigidement à la bague de guidage (37) portant la bague de contact (30).

13. Dispositif de maintien suivant la revendication 1 ou l'une des suivantes, caractérisé par le fait que les arêtes, tournées l'une vers l'autre, des bords extérieurs des bagues (28, 29) de transmission du courant, des bagues de contact (30, 31), de la bague cylindrique pression (39) et de la bague (27) sont munies de biseaux (47) et que des anneaux toriques (49) sont utilisés dans la fente intermédiaire (48) formée par les biseaux (47).

*Fig.1*

0 058 314

Fig. 2

**0 058 314**

Fig. 3

Fig. 4